(19) Europäisches Patentamt
European Patent Office
Office européen des brevets

(11) Publication number: **0 217 641 B1**

# (12) EUROPEAN PATENT SPECIFICATION

(45) Date of publication of patent specification: **22.04.92**

(51) Int. Cl.5: **G02F 1/133**, C09K 19/30, G02F 1/137

(21) Application number: **86307387.0**

(22) Date of filing: **25.09.86**

## (54) Liquid crystal display device.

(30) Priority: **27.09.85 JP 215265/85**
**14.10.85 JP 229329/85**
**24.06.86 JP 147667/86**

(43) Date of publication of application:
**08.04.87 Bulletin 87/15**

(45) Publication of the grant of the patent:
**22.04.92 Bulletin 92/17**

(84) Designated Contracting States:
**CH DE LI**

(56) References cited:
**EP-A- 0 051 738**
**EP-A- 0 131 216**
**DE-A- 2 427 002**
**GB-A- 2 144 232**

**PATENT ABSTRACTS OF JAPAN, vol. 9, no. 64 (P-343)[1787], 23rd March 1985; & JP-A-59 200 218**

**PATENT ABSTRACTS OF JAPAN, vol. 8, no. 163 (P-290)[1600], 27th July 1984; & JP-A-59 60 422**

(73) Proprietor: **SANYO ELECTRIC CO., LTD.**
**18, Keihanhondori 2-chome**
**Moriguchi-shi Osaka-fu(JP)**

Proprietor: **Tottori Sanyo Electric Co., Ltd.**
**201 Minimiyoshikata Tottori-shi**
**Tottori-ken(JP)**

(72) Inventor: **Narita, Kenichi**
**354 Mihagino 3-chome**
**Tottori-shi Tottori-ken(JP)**
Inventor: **Nakanishi, Shoji**
**199 Tomiyasu 1-chome**
**Tottori-shi Tottori-ken(JP)**

(74) Representative: **Cole, Paul Gilbert et al**
**BERESFORD & Co 2-5 Warwick Court High Holborn**
**London WC1R 5DJ(GB)**

**EP 0 217 641 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a liquid crystal display device having a liquid crystal layer in which the individual molecules are oriented so as to define a twisted structure. More particularly it relates to such a device in which the liquid crystal molecules have stable orientations and are in the state where the device can be operated at high speeds even though the structure has a large twist angle.

US patent number 3918796 discloses a twisted nematic liquid crystal display device in which the individual molecules of the liquid crystal material are oriented so as to give a structure having a twist angle of 90° A liquid crystal display device having a 90° angle, however, has a narrow viewing cone and is not suitable for being driven at high multiplexing ratios. For example, a display device of the matrix type exhibits decreasing contrast as the multiplexing ratio is increased, and if it is driven at a multiplexing ratio of 1/100 the contrast value falls to 3 to 5 which is insufficient for practical use of the device. Furthermore, this contrast value is obtained when the display is viewed in a particular direction, and the range of visual angle is limited to about 20° or less in any direction with respect to a line perpendicular to the display face. Consequently such a liquid crystal display device cannot be used for large-area displays such as high resolution dot matrix displays.

In view of the above problems studies have been carried out concerning increasing the range of available twist angles of the liquid crystal layer. Patent application number EP-A-0131216 discloses a liquid crystal display device using a different display mode. In that device which utilises the birefringence of the liquid crystal molecules the twist angle of the liquid crystal layer can be increased to from 180° to 360° and a practically useful contrast value can be obtained even when the device is driven at a multiplexing ratio of 1/100 to 1/200.

In a liquid crystal display device using the above mentioned display mode it is necessary to stabilise the orientation of the liquid crystal molecules and in particular to prevent undesirable domain formation and to control the pretilt angle. Preventing formation of undesirable domains involved prevention of lack of uniformity in the orientation of the molecule due to the increase of twist angle. For example, if the liquid crystal molecules are forced to take up a clockwise orientation, some of them may take up an anti-clockwise orientation or an orientation having a different twist angle. Such phenomena may give to non-uniformity of colour in the quiescent state of the device or of response time in the operated state of the device, resulting in a considerable decrease in the quality of the display. Control of pretilt angle is concerned with preventing slow-down in response time which can result from a low pretilt angle between the molecules of the liquid crystal and the surface of the substrate. Although a high molecular orientation film used for 90° twisted orientation has a pretilt angle of 0° to 2° (a low pretilt angle), the pretilt angle in this display mode is required to be 5° or more, preferably 10° to 30° (high pretilt angle). In the above display mode where the pretilt angle is low undesirable domains are likely to be present due to application of an electric field not less than the threshold voltage.

Orientation of the individual molecules into a high pretilt angle is obtained in EP-A-0131216 using an orientation film obtained by a vaporating an inorganic material obliquely onto a substrate. However, the direction of incidence of the evaporated material which is an important factor in the production of the orientation film is uniform only over a limited area, e.g. 10 $cm^2$ at most. In addition in this display mode the liquid crystal layer has to be relatively thin and as a result if the orientation layer is of non-uniform thickness this display mode cannot be used. For these reasons the oblique evaporation method cannot be used for the production on devices having large display areas or for the mass production of such devices.

The present invention provides a liquid crystal display device comprising:
two substrates opposed to each other,

a liquid crystal layer between the substrates, the liquid crystal layer having a structure twisted along a direction perpendicular to the substrates and presenting a chiral nematic phase, the liquid crystal molecules being oriented in said layer so that the twist angle of the twisted structure in a non-field state is from 180° to 360°;

orientation films formed on the respective inner surfaces of the substrates facing the liquid crystal layer for orienting the liquid crystal molecules homogeneously;

electrodes formed on the respective inner surfaces of the substrates facing the liquid crystal layer;

and a polariser provided on at least one of the outer sides of the substrates, characterised in that:

the orientation films are formed of a straight chain polymer having a fluoroalkyl side chain of the formula:

$C_nH_mF_{2n+1-m}$

in which n is an integer and m is 0 or an integer up to 2n.

The invention takes into account the combined effects of the liquid crystal molecules and the side chains of the polymer of which the orientation films are formed. The orientation film can be applied by a simple method such as printing or coating without having to use oblique evaporation as in the prior art. Therefore the rate of production of display device having such orientation films can be significantly improved. Although the pretilt angle (which means the angle formed between the molecules of the liquid crystal material and the surface of the substrate) is less than 5° in a non-field state because the above polymeric orientation films are used, the pretilt angle in a weak field state or in a residual field state is increased, which improves the response characteristics of the device. It is believed that this happens because of van der Walls forces or the so called "excluded volume" or "volume force" effect which are believed to influence the orientation of the molecules. Furthermore, as is apparent from the following description, liquid crystal molecules can be selected so as to exhibit stable orientation over a wide display area. Thus the present invention makes it possible to manufacture large area liquid crystal display devices efficiently, and the resulting devices have various advantages such as suitability for being driven at high levels of multiplexing, exhibiting a wide viewing cone in the display mode, having a large twist angle and taking advantage of the birefringence of the liquid crystal molecules.

The invention will now be further described, by way of example only, with reference to the accompanying drawings in which:

Fig. 1 is a sectional view of a liquid crystal display device of an embodiment of this invention;

Fig. 2 is a graph showing a relation between $-CF_3$ substitution ratio and a pretilt angle of liquid crystal molecules in the embodiment 1;

Fig. 3 is a graph showing a relation between the number n of $-C_nF_{2n+1}$ and a pretilt angle in the embodiment 2;

Fig. 4 is a graph showing a total area involving defective orientation in the effective display area in the embodiment 3;

Fig. 5 is a graph showing a relation between a liquid crystal material and occurrence of undesirable domain;

Fig. 6 is a graph showing responsive characteristics of a liquid crystal display device of an embodiment formed by using orientation films of polyimide resin;

Fig. 7 is a graph showing a relation between the contrast and the display capacity in the embodiment in Fig. 6; and

fig. 8 is a sectional view showing another example of a structure of a liquid crystal display device in accordance with this invention, where color filter layer portions are provided outside a liquid crystal layer.

## DESCRIPTION OF THE PREFERRED EMBODIMENTS

Fig. 1 is a sectional view of a liquid crystal display device of an embodiment of this invention. The reference numeral 1 denotes substrates opposed to each other. On each of the opposed inner surfaces thereof, there are provided transparent electrodes 11 for applying electric field to liquid crystal and an orientation film 12 for homogeneously orienting liquid crystal molecules. The reference numeral 2 denotes a liquid crystal layer interposed between the substrates 1 and this liquid crystal layer presents a nematic phase and has a chiral nematic display mode having a structure twisted by 180° to 360° as indicated in the above stated prior art document EP-A-131,216. The reference numeral 3 denotes a sealant for forming a liquid crystal container for keeping the liquid crystal layer 2 between the substrates 1. Polarizing plates 4 are disposed outside the substrates 1 so that the liquid crystal layer 2 is located therebetween. Otherwise, such polarizing plates may be omitted by making the substrates 1 have a polarizing function or a polarizing plate may be provided only on one of the outer sides of the substrates 1.

The above described liquid crystal layer 2 has a thickness of 7 $\mu$m with $\Delta n$ of 0.12 to 0.13, for example, so that a twisted structure can be easily formed dependent on a rotary polarization material. More preferable conditions for the liquid crystal layer 2 will be described afterwards.

As for the orientation films 12, an orienting material as indicated in Japanese Patent Laying-Open Gazette No. 163513/1980, 91430/1983 or 104129/1985 for example is principally employed in this invention. However, it is to be noted that those orienting materials sometimes produce a homeotropic orientation dependent on the manner of usage thereof as described in detail afterwards and as a result it becomes difficult to obtain a display mode having a large twist angle by homogeneous orientation and utilizing a birefringence effect of liquid crystal.

Example 1

Ring-opening copolymerization was made with various ratios of the below indicated ε-caprolactam in which one of hydrogen atoms is substituted by $CF_3$

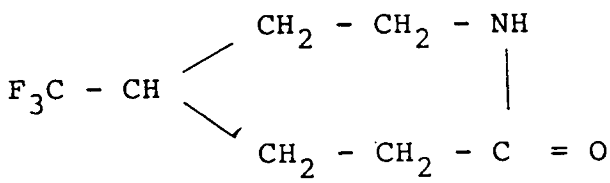

and ε-caprolactam, so that an average molecular weight of approximately 10000 atomic unit was obtained. This substance was dissolved in N - methyl - 2 - pyrrolidone in a concentration of 8%. Then, this solution was coated and dried on a pair of substrates of glass each having a base layer and an electrode film so that a film of 1000Å was obtained on each substrate. This film was rubbed in one direction by using a cotton cloth and an orientation film 12 was obtained. Then, a gap between the substrates was adjusted to make the gap for the liquid crystal layer 2 have a thickness of 10 μm. After that, liquid crystal ZLI1840 (of nematic phase) produced by Merck Inc. was filled into the gap and thus a liquid crystal display device was formed. The rubbing directions of the substrates 1 were opposite to each other so that the minimum angle 180° may be obtained as the above stated twist angle for the purpose of analyzing the characteristics. A relation between the $-CF_3$ substitution ratio and the pretilt angle of liquid crystal molecules (measured by a magnetic-capacitance method) is as shown in Fig. 2, in which a ratio of substituted caprolactam is more than 20% and less than 60% in order to make the pretilt angle have a suitable value, namely, more than 5° and less than 40° in this display mode. It was found that although it is difficult to control the pretilt angle finely by every 1° or every 0.5°, control of the pretilt angle by every 4° or every 5° (for example by 15° ± 2°) can be made by adjusting the quantity of mixture of substituted caprolactam (the substitution ratio of $-CF_3$).

Example 2

The substitution ratio by fluoro-alkyl side chain was 50% and the number n in $-C_nF_{2n+1}$ was changed successively so that a similar liquid crystal cell was formed. The characteristics of this liquid crystal cell were as shown in Fig. 3, where the pretilt angle became large according to the increase of n. In order to make the pretilt angle be in a range from 5° to 40°, n needs to be 1 or 2. Since the fluoro-alkyl side chain exerts the most important influence on the excluded volume effect which is one of the factors in the orientation, $-C_nHF_{2n}$ containing hydrogen may be used. In this case, it was understood that the number n corresponding to the pretilt angle may be any of 1, 2 and 3.

Example 3

The display devices in the Examples 1 and 2 were newly classified according to the mole ratios of substituted caprolactam and they were conducted continuously. Fig. 4 shows a total area of defective orientation (undesirable domain) generated in the effective display area of 180 × 220mm after application of plus and minus alternate pulses of $15V_{o\text{-}p}$, 100 μsec and 30Hz for 100 hours at room temperature. From Fig. 4, it is understood that the quantity of fluoro-alkyl side chains per unit number of atoms has a relation with the stability of monodomain. However, it is sufficient to know that one or more fluoro-alkyl side chains are required for 5000 atoms in principle since the relation shown in Fig. 4 is also related to kinds of liquid crystal molecules to be described afterwards.

Example 4

Since the same effect as in the case of using the above stated caprolactam can be expected in forming polyamide by using diamine and dicarbonic amine, only one example will be given in the following.

Condensation polymerization was effected between hexamethylenediamine containing a part of main chains substituted by $CF_3$ and adipic acid so that an average molecular weight of approximately 10000 atomic unit was obtained. The material thus obtained was coated and dried on a pair of substrates of glass and then rubbed in the same manner as in the above stated Example 1. Then, liquid crystal presenting a nematic phase was interposed between the substrates. The pretilt angle at that time was approximately

15°. The above stated material in this example is a high molecular resin having polyamide bonding indicated by the following general formula:

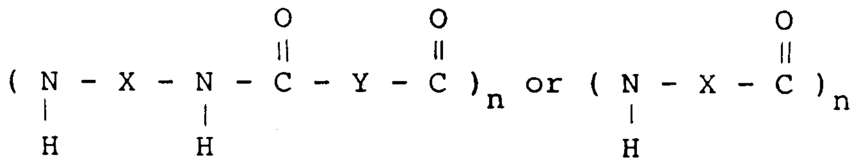

(where n is a natural number and X and Y are a single or a plurality of straight chain bonding groups such as methylene group, methylene-ether group, phenylene group or phenylene-ether group). Such a polymeric resin is advantageous in handling in that a polymerized form can be utilized since it can be solved in the solvent as compared with a polymeric resin having polyimide bonding to be described below.

However, as shown in the prior art as to the orienting material described previously, a polymeric resin having polyimide bonding can also be used effectively for orientation as in the polyamide resin although the polyimide resin is required to be polymerized on the substrates. For example, a polyimide resin expressed by the formula (I):

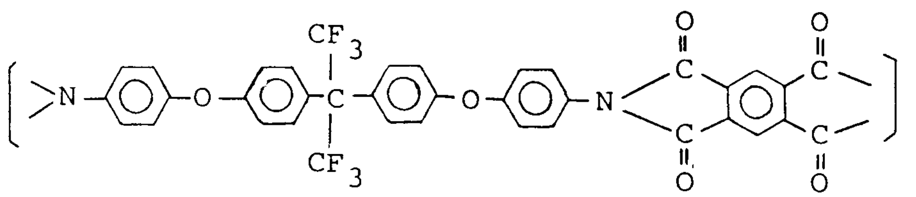

.... (I)

presented a more stable orientation according to this invention. An example of a resin having polyimide bonding will be indicated in the following Example 5.

Example 5

Diamine having fluoro-alkyl side chain as in the following formula:

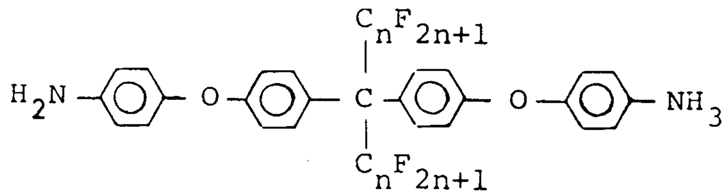

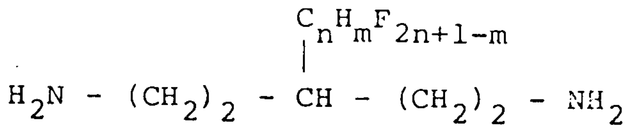

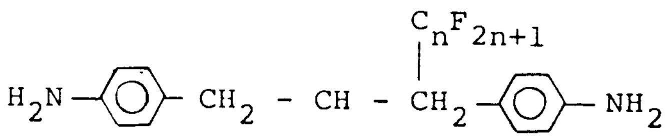

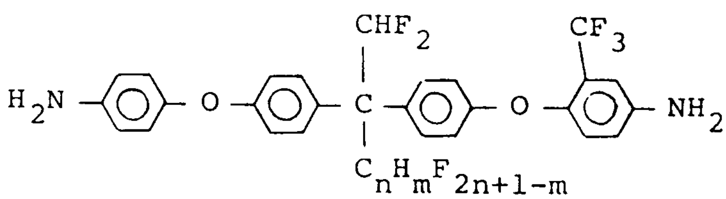

(where n and m are natural numbers)
and carboxylic acid as indicated below:

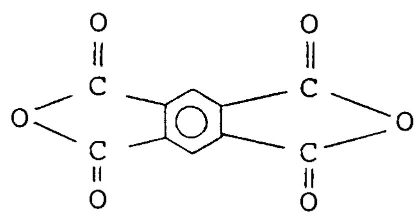

were condensed to form a polyimide resin. This resin was printed on a pair of opposed substrates and baked. Then, each of the resin materials on the opposed substrates was rubbed in one direction. The rubbing direction on one of the substrates and the rubbing direction on the other substrate were perpendicular to each other as viewed from the top (or the bottom), whereby a twist angle of 270° was attained. On that occasion, the pretilt angle was able to be regulated in a range from 5° to 30° according to the quantity of fluoro-alkyl side chains as observed by measurement by a magnetic-capacitance method.

The reasons for adopting the magnetic-capacitance method for measuring a pretilt angle in the above stated example are as follows. An optical method is usually adopted for measuring a pretilt angle in a liquid crystal display device. However, it is extremely difficult to measure a pretilt angle in this invention by an optical method. According to the results of a general analysis by the optical method, the tilt angle in the non-field state is 3° to 4° in any case. On the other hand, the magnetic-capacitance method makes use of the fact that when a magnetic field exceeding a threshold value is applied, liquid crystal showing positive dielectric anisotropy is rearranged by aligning the longitudinal axes (optical axes) of molecules in the field direction and an electric capacity caused by such phenomenon is detected by the magnetic-capacitance method. The conditions in the above described measurement of the pretilt angle are: a magnetic field of 30 to 60K gauss, a capacity measuring voltage of 0.5Vrms and a capacity measuring frequency of lkHz. In consequence, it is understood in the present invention that although the pretilt angle in the non-field state has a small value, the pretilt angle rapidly increases if a small amount of electric field is applied.

Although importance was given to the pretilt angle and the orientation films in the above described embodiment, selection of liquid crystal materials is also important for making display of good quality. In one

example, liquid crystal as indicated below:

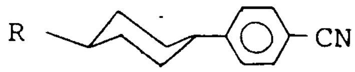

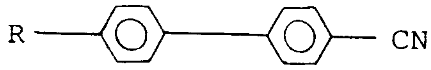

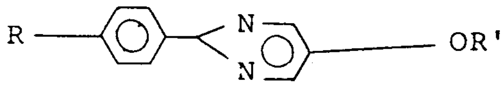

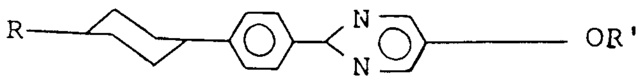

was used as the first group and liquid crystal as shown below:

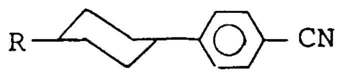

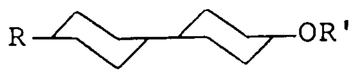

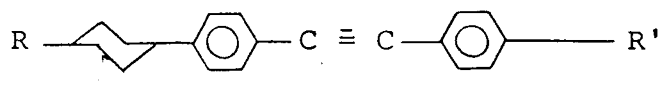

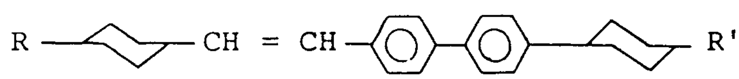

was used as the second group. The liquid crystal of the first group has generally a rigid bonding, while the liquid crystal of the second group has a relatively flexible bonding caused by trans-cyclohexane ring. Between those groups, there is a difference in the characteristics as indicated below.

| liquid crystal used in a display device | first group | second group |
|---|---|---|
| pretilt angle in non-field state | 3° ± 0.4° | 4° ± 0.4° |
| pretilt angle in weak field state | ≃ 14° | ≃ 18 |
| maximum twist angle presenting stable orientation | 230° | 275° |
| domain | undesirable domain occurs if voltage exceeding a threshold value is applied | monodomain |

Thus, the pretilt angle is varied dependent on the liquid crystal materials and the uniformity in the orientation is also influenced by the liquid crystal materials. As for the uniformity in the orientation, not only the problem of whether the device consists of monodomain or contains undesirable domain but also the problem of whether the device is in a prescribed reproducible orientation state even if a voltage exceeding a threshold value is applied thereto is important.

Fig. 5 is a characteristic view showing the results of examination as to occurrence of undesirable domain dependent on the liquid crystal materials in view of the above stated problems. The liquid crystal of trans-cyclohexane derivatives having flexible bond in Fig. 5 means liquid crystal molecules of a structure in which the volume occupied by the molecules increases when the bonding between the carbon atoms is rotated. Those liquid crystals are for example the liquid crystals belonging to the above stated second group and besides them, the following liquid crystal can be cited.

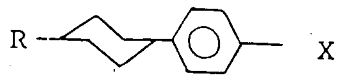
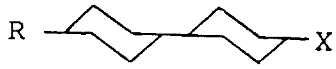
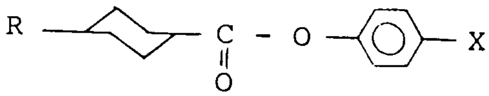
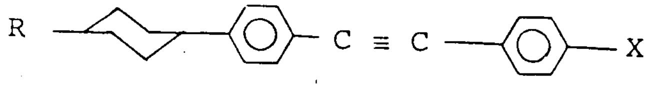
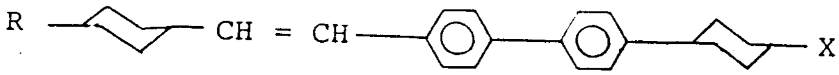
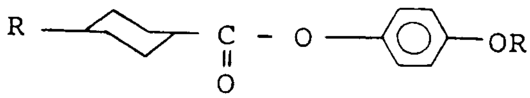

(where R is an alkyl group and X is a bonding group selected from a cyano group, an alkyl group, an alkoxy group).

If the content of such liquid crystal molecules having flexible skeleton exceeds 30mol%, monodomain is formed rapidly over a large area (for example an area larger than 100mm × 150mm). However, if a high voltage is applied, a light scattering domain is formed, bringing about a phenomenon in which a sufficient contrast can not be exhibited even if the voltage is increased to the saturation voltage after that. Such phenomenon does not occur if the content of liquid crystal molecules having flexible skeleton exceeds 50mol%. (In the above described example of the liquid crystal of the first group, the content of liquid crystal molecules having flexible skeleton is 20mol%.)

Figs. 6 and 7 are characteristic diagrams of a liquid crystal display device in which the material indicated in the above stated formula (I) is used as a main constituent of the orientation film and the liquid crystal of the second group is used. In this display device, two kinds of display modes determined by the location of a polarizing plate are used. Those display modes are called a blue mode and a yellow mode dependent on the colors presented by the device when it is not operated. In the blue mode, a dark violet color is shown in the non-selected state and colorless in the selected state, as indicated by the mark BL attached to the characteristic curve in Figs. 6 and 7. In the yellow mode, a light yellow color is exhibited in the non-select state and a dark indigo blue color is exhibited in the select state, as indicated by the mark YE in the figures. (The mark TN in Fig. 7 indicates a characteristic curve of a conventional 90° twisted orientation.)

Fig. 6 shows a response time with respect to a selection signal in the conditions of a multiplexing ratio of 1/200, a bias of 1/15 and a frame frequency of 128Hz. It can be seen from Fig. 6 that a practically effective response can be made at a temperature approximate to the room temperature.

Fig. 7 shows maximum contrast VS. number of scanning lines. Although the maximum value of the angle of visibility is not shown in Fig. 7, the angle of visibility in this invention is approximately 60° with a duty cycle of 1/100 (the angle of visibility in the conventional example is 20° in the 90° twisted orientation).

The multiplexability of the display can be evaluated by a sharpness (a ratio of the voltage for 80% saturation and the voltage for 20% saturation). The sharpness depends on the twisted angle in this display mode. By this evaluation, a display device of this invention has a particularly excellent characteristic in display and has an increasing sharpness of about 1.06 with a twist angle of 250° or more compared with the case of 90° twisted orientation. However, even with such combination of orientation films and liquid crystal, a reverse orientation occurs if the twist angle is too large. Therefore, in order to obtain a stable orientation, the twist angle is preferably less than 290°.

It was considered that color display could not be made because specified colors were shown as colors inherent to both the blue mode and the yellow mode. However, if cholesteril nonanonate of 2.0wt.% was added to liquid crystal, for example, ZLI3093 produced by Merck Inc. (mixture of three kinds of bicolor dyestuffs in 1.3 to 3.lwt.% in total), a black color can be exhibited in the non-select state in the blue mode. Consequently, color display can be made if color filter layers 13R, 13G, 13B etc. of three colors are provided outside the liquid crystal layer 21 as shown in Fig. 8 and utilized in a transmission display manner.

Although the present invention has been described and illustrated in detail, it is clearly understood that

the same is by way of illustration and example only and is not to be taken by way of limitation, the scope of the present invention being limited only by the terms of the appended claims.

## Claims

**1.** A liquid crystal display device comprising:

two substrates (1) opposed to each other,

a liquid crystal layer (2, 21) between the substrates, the liquid crystal layer having a structure twisted along a direction perpendicular to the substrates and presenting a chiral nematic phase, the liquid crystal molecules being oriented in said layer so that the twist angle of the twisted structure in a non-field state is from 180° to 360°,

orientation films (12) formed on the respective inner surfaces of the substrates facing the liquid crystal layer for orienting the liquid crystal molecules homogeneously,

electrodes (11) formed on the respective inner surfaces of the substrates facing the liquid crystal layer,

and a polariser (4) provided on at least one of the outer sides of the substrates, characterised in that:

the orientation films are formed of a straight chain polymer having a fluoroalkyl side chain of the formula:

$C_nH_mF_{2n+1m}$

in which n is an integer and m is 0 or an integer up to 2n.

**2.** A display device according to claim 1, wherein the liquid crystal layer comprises at least 30% of liquid crystal molecules having a flexible skeleton.

**3.** A display device according to claim 1, wherein the liquid crystal layer comprises at least 50% of liquid crystal molecules having a flexible skeleton.

**4.** A display device according to claim 2 or 3, wherein the skeletons of the liquid crystal molecules are rendered flexible by the presence in the molecules of trans-cyclohexane rings.

**5.** A display device according to claim 4, in which the liquid crystal molecules having flexible skeletons are selected from molecules having the following formulae:

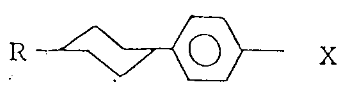

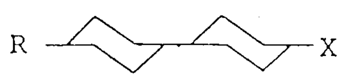

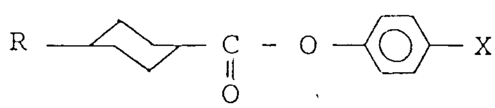

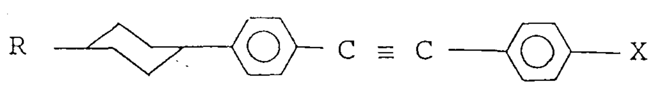

, or

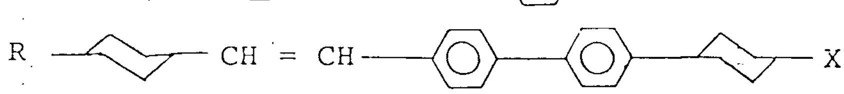

where R and R' indicate alkyl groups and X indicates a cyano group, an alkyl group or an alkoxy group.

**6.** A display device according to any preceding claim, wherein the liquid crystal molecules in the liquid crystal layer in contact with the orientation films are directed so that an angle formed between the surface of each of the substrates and the liquid crystal molecules is less than 5° in a non-field state.

7. A display device according to any preceding claim, wherein the orientation films are formed of polymeric compounds having polyamide bonding or polyimide bonding.

8. A display device in accordance with claim 7, wherein said orientation films are formed of polymers indicated by the following formula:

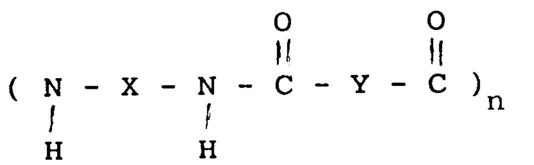

or

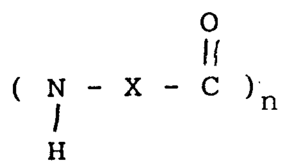

where X and Y indicate a single or a plurality of straight chain bonding groups and said fluoro-alkyl group is bonded to said straight chain bonding group (X and/or Y).

9. A display device according to any preceding claim, wherein the twist angle of the twisted structure in said liquid crystal layer is an angle selected in a range from 250° to 290°.

**Revendications**

1. Dispositif d'affichage à cristaux liquides, comprenant:
   deux substrats (1) opposés l'un à l'autre,
   une couche de cristaux liquides (2, 21) entre les substrats, cette couche de cristaux liquides ayant une structure tordue le long d'une direction perpendiculaire aux substrats et présentant une phase chiral-nématique, les molécules des cristaux liquides étant orientées dans ladite couche de telle manière que l'angle de torsion de la structure tordue dans un état sans champ est de 180° à 360°,
   des pellicules d'orientation (12) formées sur les surfaces intérieures respectives des substrats tournées vers la couche de cristaux liquides pour orienter les molécules des cristaux liquides de façon homogène,
   des électrodes (11) formées sur les surfaces intérieures respectives des substrats tournées vers la couche de cristaux liquides,
   et un polariseur (4) prévu sur au moins une des surfaces extérieures des substrats, caractérisé en ce que:
   les pellicules d'orientation sont formées d'un polymère à chaîne linéaire ayant une chaîne latérale de fluoroalkyle de la formule

$$C_nH_mF_{2n+1-m}$$

dans laquelle n est un nombre entier et m est zéro ou un nombre entier jusqu'à 2n.

2. Dispositif d'affichage selon la revendication 1, dans lequel la couche de cristaux liquides comporte au moins 30% de molécules de cristaux liquides ayant un squelette flexible.

3. Dispositif d'affichage selon la revendication 1, dans lequel la couche de cristaux liquides comporte au moins 50% de molécules de cristaux liquides ayant un squelette flexible.

4. Dispositif d'affichage selon la revendication 2 ou 3, dans lequel les squelettes des molécules de cristaux liquides sont rendus flexibles par la présence de noyaux de trans-cyclohexane dans ces molécules.

5. Dispositif d'affichage selon la revendication 4, dans lequel les molécules de cristaux liquides ayant des squelettes flexibles sont sélectionnées parmi les molécules suivantes:

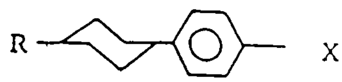

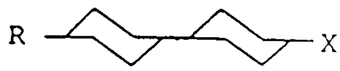

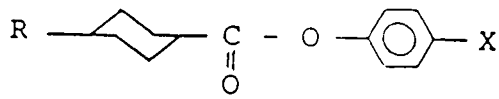

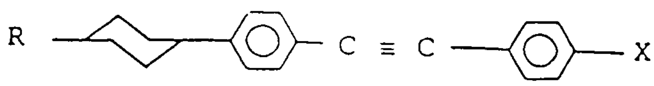

, ou

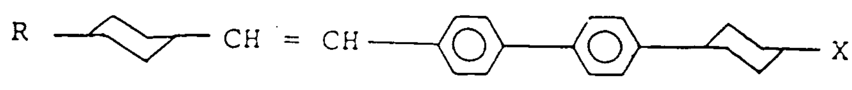

où R et R' sont des groupes alkyle et X est un groupe cyano, un groupe alkyle ou un groupe alcoxy.

6. Dispositif d'affichage selon une des revendications précédentes, dans lequel les molécules de cristaux liquides dans la couche de cristaux liquides en contact avec les pellicules d'orientation sont orientées de telle manière que l'angle formé entre la surface de chacun des substrats et les molécules de cristaux liquides est de moins de 5° dans un état sans champ.

7. Dispositif d'affichage selon une des revendications précédentes, dans lequel les pellicules d'orientation sont formées de composés polymériques ayant des liaisons polyamide ou des liaisons polyimide.

8. Dispositif d'affichage selon la revendication 7, dans lequel les pellicules d'orientation sont formées de polymères ayant les formules suivantes:

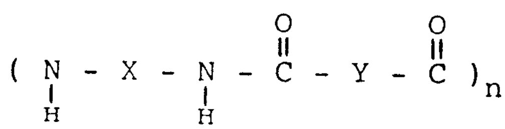

ou

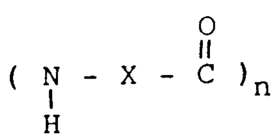

où X et Y représentent chacun un groupe simple ou une pluralité de groupes de liaison à chaîne linéaire et ledit groupe fluoroalkyle est lié à ce groupe de liaison à chaîne linéaire (X et/ou Y).

9. Dispositif d'affichage selon une des revendications précédentes, dans lequel l'angle de torsion de la structure tordue dans la couche de cristaux liquides est un angle sélectionné dans le domaine de 250° à 290°.

**Patentansprüche**

1. Flüssigkristall-Anzeigevorrichtung mit
zwei einander gegenüberliegenden Substraten (1),
einer Flüssigkristallschicht (2, 21) zwischen den Substraten, die eine in Richtung senkrecht zu den Substraten verdrillte Struktur hat und eine chiral-nematische Phase aufweist, wobei die Flüssigkristallmoleküle der Schicht so orientiert sind, daß der Verdrehungswinkel der verdrillten Struktur bei Abwesenheit eines Feldes 180 Grad bzw. 360 Grad beträgt,
Orientiertungsfilmen 12, die jeweils auf den der Flüssigkristallschicht zugewandten Innenflächen der Substrate gebildet sind, um die Flüssigkristallmoleküle homogen zu orientieren,
Elektroden (11), die jeweils an den der Flüssigkristallschicht zugewandten Innenflächen der Substrate gebildet sind, und einem Polarisator (4) auf mindestens einer der Außenseiten der Substrate,
dadurch **gekennzeichnet,** daß
die Orientierungsfilme aus einem geradkettigen Polymer mit einer Fluoralkyl-Seitenkette der Formel

$C_n H_m F_{2n+1-m}$,

in der n eine ganze Zahl und m Null oder eine ganze Zahl bis zu 2n ist, gebildet sind.

**2.** Anzeigevorrichtung nach Anspruch 1, wobei die Flüssigkristallschicht wenigstens 30 % Flüssigkristallmoleküle mit einem flexiblen Skelett enthält.

**3.** Anzeigevorrichtung nach Anspruch 1, wobei die Flüssigkristallschicht wenigstens 50 % Flüssigkristallmoleküle mit einem flexiblen Skelett enthält.

**4.** Anzeigevorrichtung nach Anspruch 2 oder 3, wobei die Skelette der Flüssigkristallmoleküle durch die Anwesenheit von Trans-Cyklohexan-Ringen flexibel gemacht sind.

**5.** Anzeigevorrichtung nach Anspruch 4, wobei die Flüssigkristallmoleküle mit flexiblen Skeletten Moleküle gemäß wenigstens einer der folgenden Formeln sind:

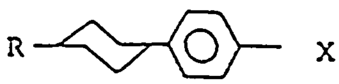

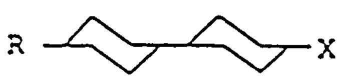

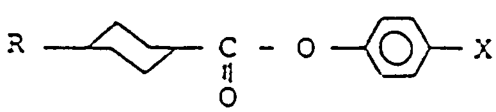

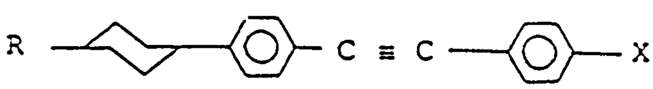

, or

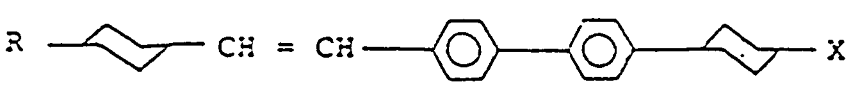

in denen R und R' Alkyl-Gruppen angeben und X eine Cyano-, eine Alkyl- oder eine Alkoxy-Gruppe angibt.

**6.** Anzeigevorrichtung nach jedem der vorstehenden Ansprüche, wobei die Flüssigkristallmoleküle in der mit den Orientierungsfilmen in Kontakt befindlichen Flüssigkristallschicht so ausgerichtet sind, daß zwischen der Oberfläche jedes Substrates und den Flüssigkristallmolekülen ein Winkel gebildet ist, der bei Abwesenheit eines Feldes weniger als 5° ist.

**7.** Anzeigevorrichtung nach jedem der vorstehenden Ansprüche, wobei die Orientierungsfilme aus polymeren Bestandteilen mit Polyamidbindung oder Polyimidbindung gebildet sind.

**8.** Anzeigevorrichtung nach Anspruch 7, wobei die Orientierungsfilme aus Polymeren nach der folgenden Formel:

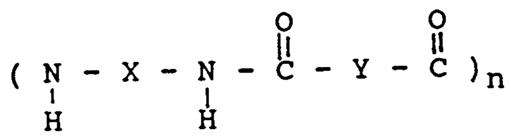

oder

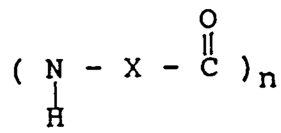

in der X und Y eine einzige oder mehrere geradkettige Bindungsgruppen angibt und die Fluor-Alkyl-Gruppe mit der geradkettigen Bindungsgruppe (X und/oder Y) verbunden ist, gebildet sind.

**9.** Anzeigevorrichtung nach jedem der vorstehenden Ansprüche, wobei der Verdrehungswinkel der verdrillten Struktur in der Flüssigkristallschicht ein Winkel im Bereich von 250° bis 290° ist.

FIG.1

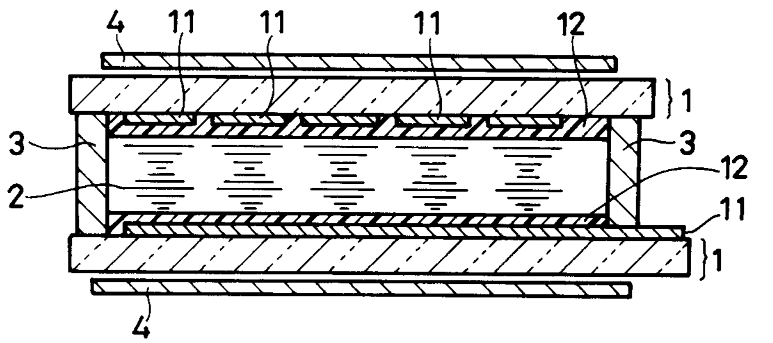


FIG.2

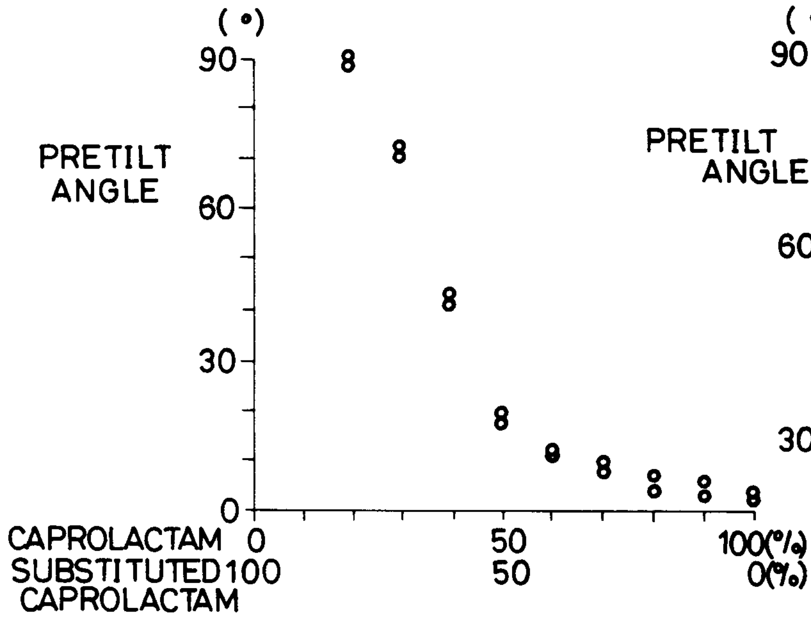


FIG.3

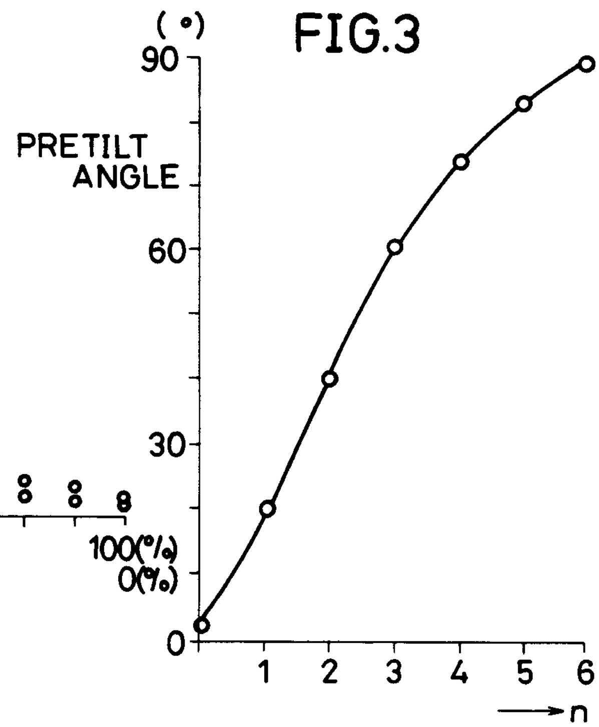


FIG.4

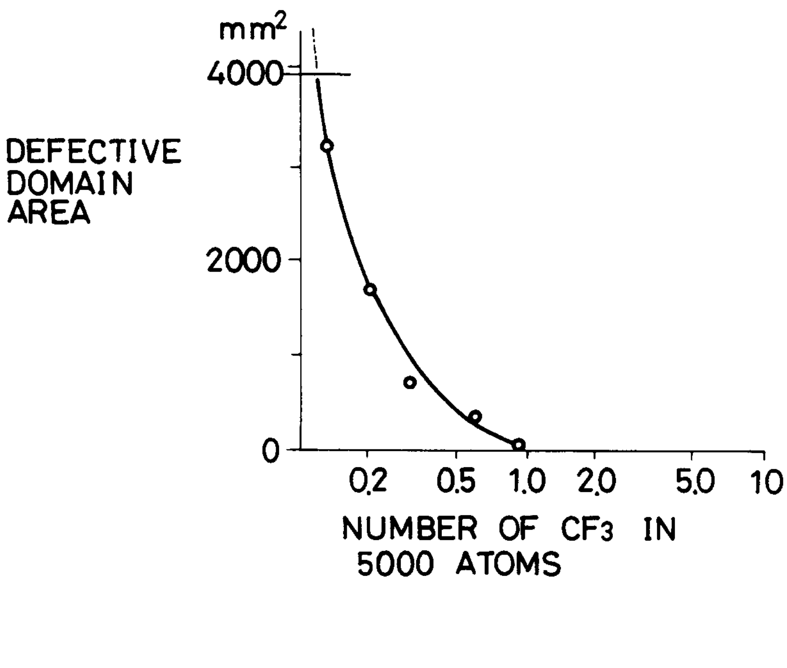

FIG.5

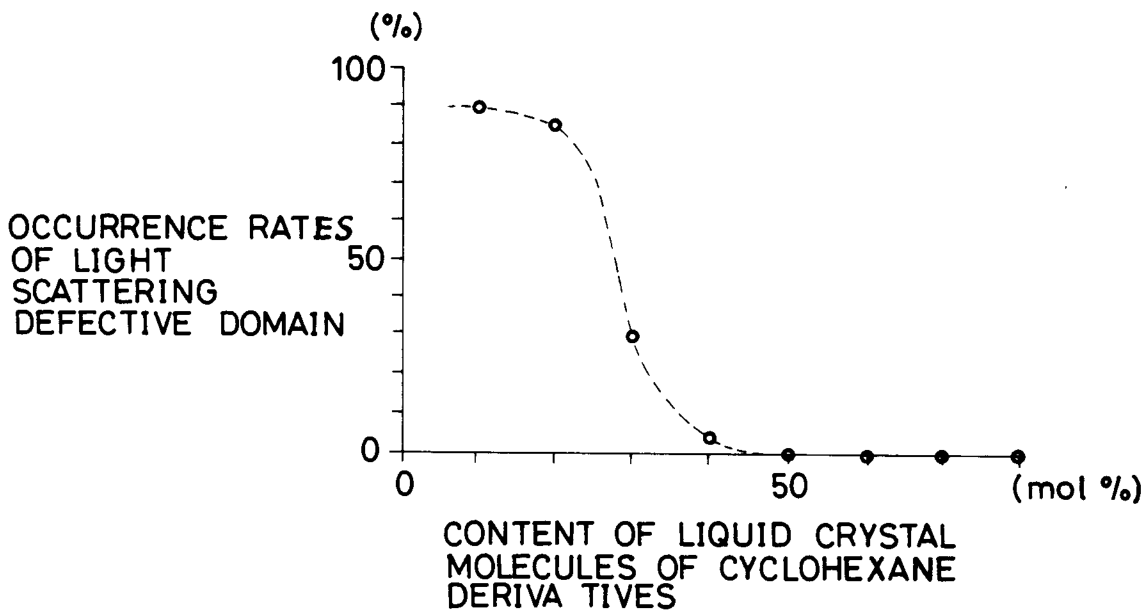
(%)
100
OCCURRENCE RATES OF LIGHT SCATTERING DEFECTIVE DOMAIN
50
0
0
50
(mol %)
CONTENT OF LIQUID CRYSTAL MOLECULES OF CYCLOHEXANE DERIVA TIVES

FIG.6

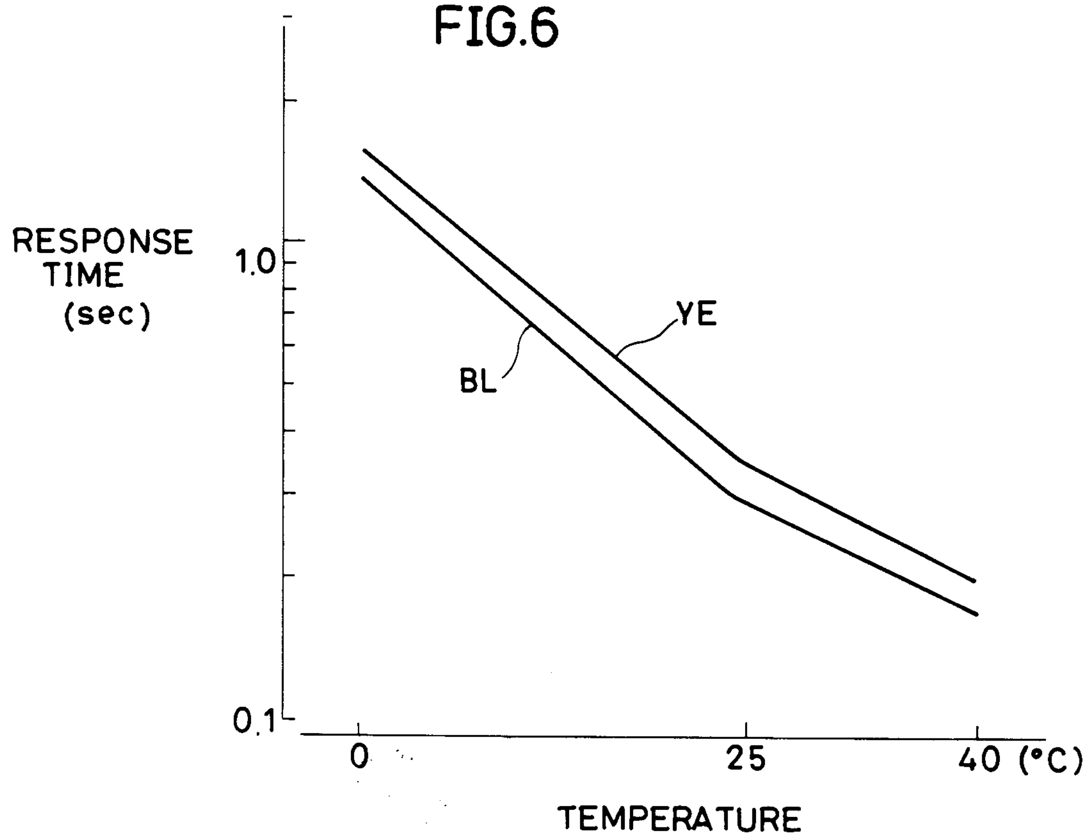
RESPONSE TIME (sec)
1.0
0.1
YE
BL
0
25
40 (°C)
TEMPERATURE

FIG.7

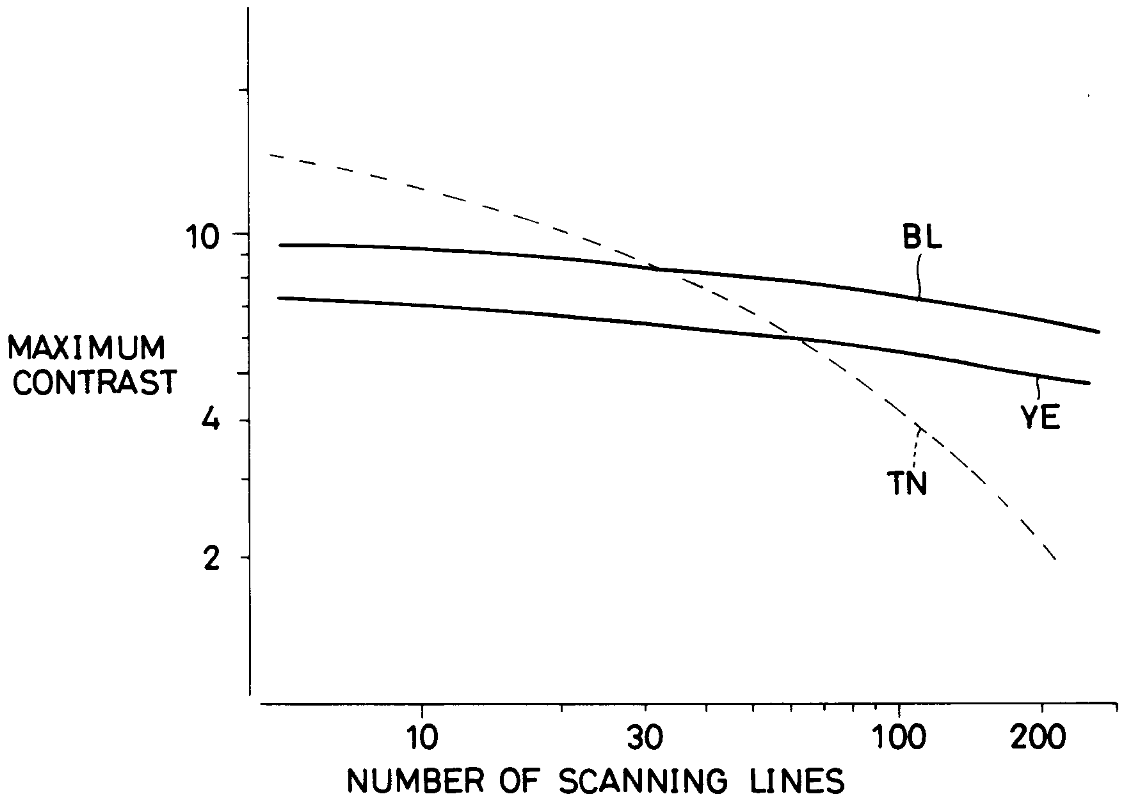
10
4
2
MAXIMUM CONTRAST
BL
YE
TN
10
30
100
200
NUMBER OF SCANNING LINES

FIG.8

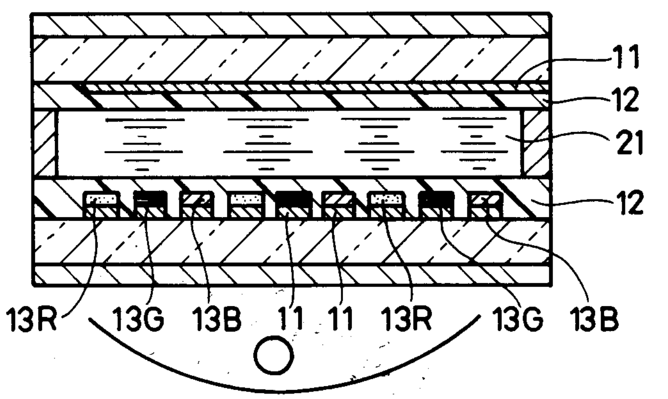
11
12
21
12
13R
13G
13B
11
11
13R
13G
13B